# FASCICULE DE BREVET EUROPEEN

(11) **EP 3 456 628 B1**
(45) Date de publication et mention de la délivrance du brevet: **27.11.2019**
(21) Numéro de dépôt: 18194910.8
(22) Date de dépôt: 17.09.2018
(51) Int. Cl.: B64C 23/06, B64C 3/54

(54) **AILETTE EQUIPPEE D'UN DISPOSITIF DE CHANGEMENT DE CONFIGURATION A FAIBLE CONSOMMATION D'ENERGIE, AERONEF COMPRENANT LADITE AILETTE**
FLÜGEL, DER MIT EINER VORRICHTUNG ZUR KONFIGURATIONSÄNDERUNG MIT GERINGEM ENERGIEVERBRAUCH AUSGESTATTET IST, LUFTFAHRZEUG, DAS EINEN SOLCHEN FLÜGEL UMFASST
FIN EQUIPPED WITH A CONFIGURATION CHANGE DEVICE WITH LOW POWER CONSUMPTION, AIRCRAFT COMPRISING SAID FIN

(30) Priorité: 19.09.2017 FR 1758660
(43) Date de publication de la demande: 20.03.2019
(73) Titulaire: Airbus Operations S.A.S., 31060 Toulouse (FR)
(72) Inventeur: SAUCRAY, Jean-Michel, 31500 TOULOUSE (FR)
(74) Mandataire: Gicquel, Olivier Yves Gérard

(56) Documents cités:
- GB-A- 299 212
- US-A- 1 888 418
- US-A1- 2016 244 153
- US-A1- 2017 021 918

## Description

La présente demande se rapporte à une ailette équipée d'un dispositif de changement de configuration à faible consommation d'énergie ainsi qu'à un aéronef comprenant ladite ailette. Pour réduire la consommation d'énergie, les aéronefs comprennent généralement aux extrémités de leurs ailes des ailettes, également appelées « winglets » ou « tip fence », utilisées pour réduire la traînée de la voilure, notamment en phase de croisière.

Sur le plan structural, l'ailette comprend une structure interne et une peau, rapportée sur la structure interne, qui est généralement formée de plusieurs panneaux juxtaposés.

Selon une première configuration, chaque ailette est fixe et s'étend dans un plan qui forme un angle supérieur à 45° avec le plan de l'aile, ledit angle ainsi que la forme de l'ailette étant optimisés pour réduire la traînée de l'aile en phase de croisière. Cependant, cette première configuration conduit à surcharger l'aile dans certaines circonstances (conditions extrêmes de turbulence, manœuvres), ce qui impacte le dimensionnement structural de l'aile et par conséquent sa masse.

Pour remédier à cet inconvénient, des solutions ont été proposées pour rendre mobile ou déformable les ailettes afin de leur permettre d'occuper un premier état dans lequel chaque ailette forme un angle avec l'aile optimisé afin de réduire la traînée de l'aile en phase de croisière et un deuxième état dans lequel chaque ailette est disposée approximativement dans le lit du vent limitant ainsi la surcharge de l'aile dans certaines phases de vol.

Parmi ces solutions, selon un premier mode de réalisation comme présenté dans les brevets US 1 888 418 et US 2016/244153, chaque ailette est mobile et reliée à l'aile par une charnière ou une glissière. En complément, au moins un actionneur est prévu pour contrôler le mouvement de l'ailette. Ce premier mode de réalisation n'est pas pleinement satisfaisant en raison principalement de sa masse qui est importante.

Selon un deuxième mode de réalisation, l'ailette peut se déformer. Sa peau est alors configurée pour se déformer de manière élastique et sa structure interne peut se déformer de manière élastique ou comprendre au moins une articulation. En complément, au moins un actionneur de type piézoélectrique ou à mémoire de forme est prévu pour déformer et maintenir déformée la structure interne et ainsi l'ailette. Ce deuxième mode de réalisation n'est pas pleinement satisfaisant en raison principalement d'une consommation d'énergie importante. La présente invention vise à remédier aux inconvénients de l'art antérieur.

A cet effet, l'invention a pour objet une ailette reliée à une aile d'un aéronef et équipée d'un dispositif de changement de configuration, ladite ailette étant configurée pour se déformer de manière élastique entre une première configuration en l'absence d'un chargement d'activation et une deuxième configuration en présence d'un chargement d'activation, ledit dispositif de changement de configuration comprenant :
- un mécanisme d'activation configuré pour occuper un état non activé dans lequel il n'exerce aucun chargement sur l'ailette et un état activé dans lequel il exerce le chargement d'activation de manière à déformer l'ailette de la première configuration vers la deuxième configuration, et
- un mécanisme de maintien configuré pour maintenir l'ailette dans la deuxième configuration,

Selon l'invention, le mécanisme de maintien comprend :
- au moins un câble de blocage qui présente un premier point d'ancrage relié à l'ailette,
- au moins un système de blocage traversé par le câble de blocage et configuré pour occuper un état libre dans lequel il n'immobilise pas le câble de blocage et un état bloqué dans lequel il immobilise le câble de blocage,
- le premier point d'ancrage et le système de blocage étant positionnés de sorte que le câble de blocage tendu entre le premier point d'ancrage et le système de blocage est configuré pour maintenir l'ailette lorsque cette dernière occupe la deuxième configuration,
- le système de blocage comprenant un réservoir contenant un matériau présentant un point de fusion et configuré pour occuper un état solide, lorsque la température du matériau est inférieure au point de fusion, dans lequel il immobilise le câble de blocage ce qui correspond à l'état bloqué du système de blocage et un état liquide, lorsque la température du matériau est supérieure au point de fusion, dans lequel il n'immobilise pas le câble de blocage et autorise son déplacement ce qui correspond à l'état libre du système de blocage.

Selon l'invention, chaque ailette peut occuper deux configurations adaptées aux différentes conditions de vol, une première configuration dans laquelle l'ailette n'est pas déformée et une deuxième configuration dans laquelle l'ailette est déformée de manière élastique et, pour chaque ailette, un dispositif de changement de configuration permettant de maintenir l'ailette à l'état déformé sans apport d'énergie.

Selon une autre caractéristique, le matériau est choisi de manière à ce que le point de fusion soit inférieur à une température atmosphérique au sol et supérieur à une température atmosphérique à une altitude de l'aéronef durant une phase de croisière du vol.

Selon une autre caractéristique, le matériau présent dans le réservoir et le câble de blocage sont configurés de sorte qu'une contrainte de rupture en cisaillement entre le matériau et chaque câble de blocage est calibrée de manière à obtenir un passage de l'ailette de la deuxième configuration à la première configuration lorsqu'un chargement de l'aile de l'aéronef dépasse un seuil donné.

Selon un mode de réalisation, le matériau est une glace atmosphérique et le mécanisme de maintien comprend deux câbles de blocage qui présentent chacun un diamètre de l'ordre de 3 mm et une longueur immergée dans le matériau de l'ordre de 100 à 150 mm.

Selon une autre caractéristique, le système de maintien comprend un système d'activation configuré pour provoquer la fusion du matériau.

Selon une autre caractéristique, le mécanisme de maintien comprend un système de maintien en tension de chaque câble de blocage.

Selon une première variante, le mécanisme d'activation comprend au moins un élément à mémoire de forme activable par effet joule configuré pour occuper un état non déformé et un état déformé dans lequel il génère le chargement d'activation et au moins une alimentation électrique configurée pour délivrer une énergie électrique à l'élément à mémoire de forme pour provoquer un passage de l'état non déformé à l'état déformé.

Selon un mode de réalisation, au moins un câble de blocage est inséré dans un des éléments à mémoire de forme.

Selon un mode de réalisation, au moins un câble de blocage suit un cheminement différent de (ou des) élément(s) à mémoire de forme.

Selon une deuxième variante, le dispositif de changement de configuration comprend, pour chaque câble de blocage, un actionneur relié à la deuxième extrémité du câble de blocage, positionné à l'opposé du premier point d'ancrage par rapport au système de blocage et configuré pour tirer sur le câble de blocage.

Selon une autre caractéristique, le dispositif de changement de configuration comprend un contrôleur pour coordonner le mécanisme d'activation configuré pour déformer l'ailette et le mécanisme de maintien configuré pour maintenir l'ailette à l'état déformé.

Selon une autre caractéristique, le contrôleur est configuré pour déclencher automatiquement et de manière autonome un changement de configuration de l'ailette en fonction d'une valeur d'au moins un critère de chargement de chaque aile.

L'invention a également pour objet un aéronef comprenant des ailes chacune pourvues d'au moins une ailette selon l'invention.

D'autres caractéristiques et avantages ressortiront de la description de l'invention qui va suivre, description donnée à titre d'exemple uniquement, en regard des dessins annexés parmi lesquels :
- La figure 1 est une vue de face d'un aéronef,
- Les figures 2A et 2B sont des vues en perspective d'une extrémité d'une aile occupant respectivement deux configurations différentes,
- Les figures 3A à 3C sont des schémas qui illustrent une ailette respectivement dans une première configuration, lors de sa déformation et dans une deuxième configuration,
- Les figures 4A à 4C sont des vues latérales de l'extrémité de l'ailette respectivement dans une première configuration, lors de sa déformation et dans une deuxième configuration,
- Les figures 5A et 5B sont des schémas qui illustrent un système de blocage respectivement à l'état libre et à l'état bloqué,
- La figure 6 est une vue en perspective d'une ailette qui illustre un premier mode de réalisation, et
- La figure 7 est une vue en perspective d'une ailette qui illustre un deuxième mode de réalisation.

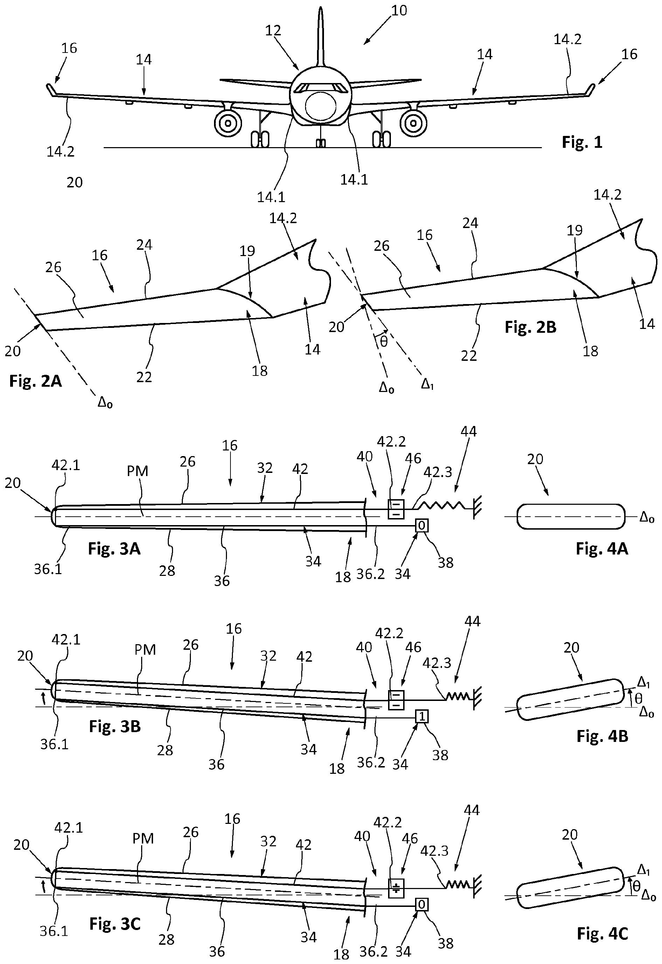

Sur la figure 1, on a représenté un aéronef 10 qui comprend entre autres un fuselage 12 et deux ailes 14 qui s'étendent de part et d'autre du fuselage 12.

Chaque aile 14 comprend une première extrémité 14.1 reliée au fuselage et une deuxième extrémité 14.2 pourvue d'au moins une ailette 16, un bord d'attaque et un bord de fuite. Le plan qui passe approximativement par les bords d'attaque et de fuite est appelé plan de l'aile. Sur le plan géométrique, chaque ailette 16 comprend une première extrémité 18 reliée à l'aile 14 par une jonction 19, une deuxième extrémité 20 libre, un bord d'attaque 22, un bord de fuite 24, une face supérieure 26 et une face inférieure 28 qui relient le bord d'attaque 22 et le bord de fuite 24.

Le plan qui passe approximativement par les bords d'attaque et de fuite est appelé plan de l'ailette.

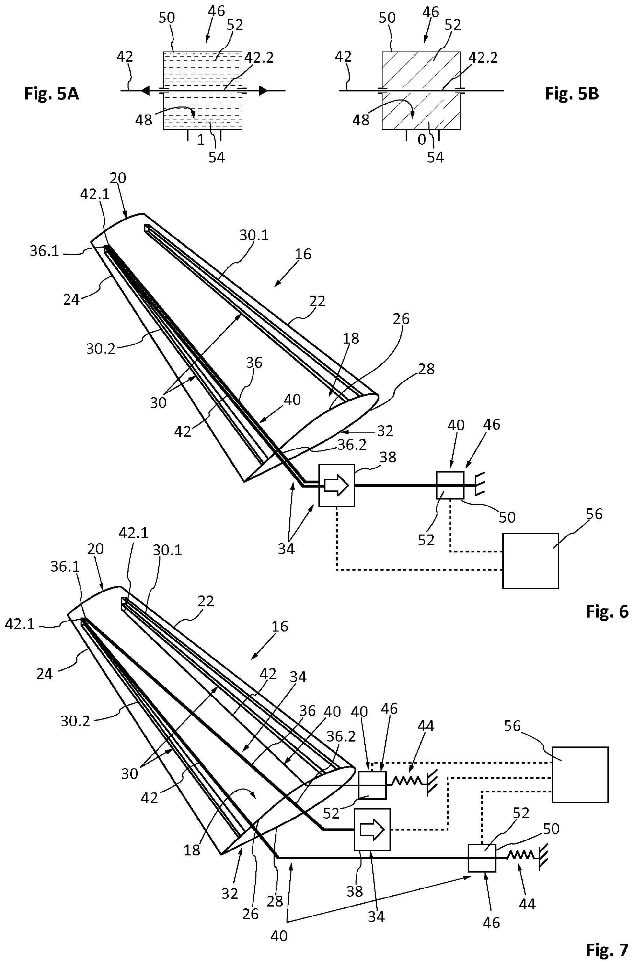

Sur le plan structural, chaque ailette 16 comprend une structure interne 30 (visible sur les figures 6 et 7) et une peau 32 rapportée sur la structure interne qui délimite les faces supérieure et inférieure 26 et 28.

Selon un mode de réalisation, la structure interne 30 comprend un longeron avant 30.1 et un longeron arrière 30.2 reliés par des nervures (non représentées) ainsi que la peau 32 qui comprend plusieurs panneaux juxtaposés reliés à la structure interne 30.

Chaque ailette 16 est configurée pour occuper au moins deux configurations différentes. Pour la présente description, une configuration de l'ailette se caractérise par les dimensions de l'ailette, la forme de l'ailette qui peut être plane, courbe, vrillée ou autre et/ou la position de l'ailette par rapport à l'aile.

Comme illustré sur la figure 2A, dans une première configuration, l'ailette est configurée pour optimiser la charge de l'aile dans certaines circonstances de vol, comme par exemple lors des manœuvres, lors du décollage, lors de l'atterrissage et/ou lors de conditions de turbulences extrêmes.

Selon un mode de réalisation, dans la première configuration, l'ailette 16 est disposée dans le lit du vent, le plan de l'ailette Δ₀ et le plan du lit du vent étant approximativement coplanaires. Comme illustré sur la figure 2B, dans une deuxième configuration, l'ailette est configurée pour optimiser la traînée de l'aile, notamment lors de la phase de croisière du vol.

Selon un mode de réalisation, dans la deuxième configuration, le plan de l'ailette Δ₁ forme un vrillage d'angle θ de quelques degrés avec le plan de l'ailette Δ₀ dans la première configuration. Bien entendu, l'invention n'est pas limitée à la capacité de générer la modification du vrillage entre les première et deuxième configurations, tous les paramètres de forme de l'ailette tels que l'angle entre le plan de l'ailette et le plan de l'aile, l'épaisseur du profil de l'ailette, la cambrure du profil de l'ailette, la flexion de l'ailette et la variation de ces paramètres le long de l'envergure pourront être modifiés selon les besoins exprimés par l'état de l'art de l'optimisation aéro-élastique, ces mouvements et déformations étant générés par le chargement d'activation tel que décrit ci-après.

L'ailette 16 est configurée pour se déformer de manière élastique entre la première configuration et la deuxième configuration.

Par déformation élastique, on entend une déformation réversible Ainsi, une structure ou une pièce qui a une configuration initiale en l'absence d'un chargement, peut se déformer de sorte à occuper une configuration déformée lorsqu'au moins un chargement lui est appliqué et revient dans sa configuration initiale lorsque le chargement n'est plus appliqué.

Par plan médian de l'ailette PM, on entend un plan qui ne subit pas un allongement ou une contraction lorsque l'ailette est déformée de manière élastique.

Pour la suite de la description, le chargement permettant de faire passer l'ailette de la première configuration à la deuxième configuration est appelé chargement d'activation. Le chargement d'activation est déporté du plan médian PM. Il peut être un chargement en flexion, en torsion ou une combinaison des deux et comprendre également des composantes de chargement en traction et compression.

Selon une particularité de l'invention, l'ailette 16 est configurée pour occuper la première configuration en l'absence de chargement d'activation.

Sur le plan structural, l'ailette 16 peut être conçue comme celle du deuxième mode de réalisation de l'art antérieur. Ainsi, la structure interne 30 et la peau 32 occupent la première configuration en l'absence de chargement d'activation et se déforment de manière élastique pour occuper la deuxième configuration en présence du chargement d'activation.

L'ailette 16 est équipée d'un dispositif de changement de configuration qui comprend au moins un mécanisme d'activation 34 configuré pour occuper un état non activé (visible sur les figures 3A, 4A, 3C, 4C) dans lequel il n'exerce aucun chargement sur l'ailette 16 et un état activé (visible sur les figures 3B, 4B) dans lequel il exerce sur l'ailette 16 le chargement d'activation. Selon une première variante, le mécanisme d'activation 34 comprend au moins un actionneur comme par exemple un vérin qui présente des points d'ancrage positionnés de manière adéquate pour générer le chargement d'activation sur l'ailette 16.

Selon une deuxième variante, le mécanisme d'activation comprend au moins un câble présentant une première extrémité, reliée à la structure interne 30 et/ou à la peau 32 de l'ailette 16, et une deuxième extrémité reliée à un actionneur configuré pour exercer un effort de traction sur le câble, le câble cheminant à l'intérieur de l'ailette 16 et les première et deuxième extrémités étant positionnées de manière adéquate pour générer le chargement d'activation.

Selon une troisième variante, le mécanisme d'activation 34 comprend au moins un élément à mémoire de forme 36 configuré pour occuper un état initial (non déformé) et un état déformé lorsqu'il est activé. De préférence, chaque élément à mémoire de forme 36 est activable par effet joule. Alternativement, l'élément à mémoire de forme pourra être activé par chauffage direct par exemple entre une résistance et l'élément à mémoire de forme.

Selon un mode de réalisation, l'élément à mémoire de forme 36 est filiforme. Il comprend plusieurs câbles en matériau à mémoire de forme agencés de manière à former un tapis ou un toron.

Selon un premier exemple, l'élément à mémoire de forme 36 est un toron de câbles présentant un diamètre de 12 mm. Selon un deuxième exemple, l'élément à mémoire de forme 36 est un tapis de câbles qui a une section transversale de 30 mm x 4mm. Ce deuxième exemple permet de générer un effort de 1200 DaN sur plusieurs dizaines de milliers de cycle. Les câbles peuvent être positionnés de part et d'autre de la section travaillante du longeron avant 30.1, du longeron arrière 30.2, des longerons avant et arrière et/ou transversalement entre les longerons avant et arrière en fonction du chargement d'activation souhaité.

L'élément à mémoire de forme 36 filiforme comprend une première extrémité 36.1 reliée à l'ailette et positionnée à proximité de la deuxième extrémité 20 libre de l'ailette ainsi qu'une deuxième extrémité 36.2 positionnée à proximité de la jonction 19 reliant l'ailette 16 à l'aile 14. Les positions des première et deuxième extrémités 36.1 et 36.2 sont déterminées en fonction du chargement d'activation souhaité et de l'optimisation structurale et aéro-élastique de l'ailette 16.

Un élément à mémoire de forme 36 longiligne permet de limiter la masse embarquée. Ainsi, dans le cas d'un tapis de câbles, l'élément à mémoire de forme 36 a une masse d'ordre de grandeur du kilogramme pour une longueur de l'ordre de 2 m.

En complément du (ou des) élément(s) à mémoire de forme 36 activable(s) par effet joule, le mécanisme d'activation 34 comprend au moins une alimentation électrique 38, reliée à chaque élément à mémoire de forme 36 activable par effet joule, configurée pour occuper un état repos dans lequel elle ne fournit pas d'énergie électrique et un état activé dans lequel elle délivre une énergie électrique provoquant le passage à l'état déformé de chaque élément à mémoire de forme 36 activable par effet joule et sa contraction. Avantageusement, l' (ou les) élément(s) à mémoire de forme 36 et/ou l'alimentation électrique 38 sont isolés pour limiter les déperditions thermiques. A titre d'exemple, ils comprennent un revêtement isolant thermique en élastomère ou qui se présente sous la forme d'une nappe de textile ou de fibres de verre éventuellement renforcée.

Pour donner un ordre de grandeur, l'opération de déformation de l'ailette 16 nécessite une énergie de l'ordre de quelques centaines de watts pendant une durée d'une minute environ. En complément du mécanisme d'activation 34, le dispositif de changement de configuration de l'ailette comprend un mécanisme de maintien 40 configuré pour maintenir l'ailette 16 dans la deuxième configuration, à l'état déformé, malgré les efforts de rappel induits par le cumul des efforts aérodynamiques induits par le déplacement de l'ailette 16 et des efforts dus à la déformation élastique de l'ailette 16.

Ce mécanisme de maintien 40 comprend au moins un câble de blocage 42, un système de maintien en tension 44 de chaque câble de blocage 42, au moins un système de blocage 46 configuré pour occuper un état libre dans lequel il n'immobilise pas le (ou les) câble(s) de blocage 42 et un état bloqué dans lequel il immobilise le (ou les) câble(s) de blocage 42, le système de blocage 46 occupant l'état bloqué sans apport d'énergie ainsi qu'au moins un système d'activation 48 configuré pour provoquer un passage de l'état bloqué à l'état libre du système de blocage 42.

Chaque câble de blocage 42 peut être métallique ou en fibres synthétiques et doit être inextensible ou quasiment inextensible.

A titre d'exemple, deux câbles en acier inoxydable, ayant chacun un diamètre de l'ordre de 3 mm, suffisent pour maintenir l'ailette 16 à l'état déformé dans la deuxième configuration. Pour une longueur de l'ordre de 2 m, la masse de ces deux câbles de blocage 42 est inférieure à 0,3 Kg.

Selon un mode de réalisation visible sur la figure 6, au moins un câble de blocage 42 est inséré dans un des éléments à mémoire de forme 36.

Selon un mode de réalisation visible sur la figure 7, au moins un câble de blocage 42 suit un cheminement différent de l' (ou des) élément(s) à mémoire de forme 36.

Chaque câble de blocage 42 comprend un premier point d'ancrage 42.1 relié à l'ailette, positionné à proximité de la deuxième extrémité 20 libre de l'ailette 16 et une portion 42.2 traversant le système de blocage 46 qui est positionné à proximité de la jonction 19 reliant l'ailette 16 à l'aile 14. Les positions du premier point d'ancrage 42.1 et du système de blocage 46 sont déterminées de sorte que le (ou les) câble(s) de blocage 42 tendu(s) entre le premier point d'ancrage 42.1 et le système de blocage 46 maintien(nen)t l'ailette dans la deuxième configuration.

Le système de blocage 46 est fixé à l'ailette 16 (à la structure interne et/ou à la peau de l'ailette) ou à l'aile 14 par tout moyen approprié.

Pour chaque câble de blocage 42, le système de maintien en tension 44 est configuré pour maintenir tendu le câble de blocage 42 entre le premier point d'ancrage 42.1 et le système de blocage 46, notamment lors de la déformation de l'ailette 16.

Selon un mode de réalisation, l' (ou les) élément(s) à mémoire de forme 36 peu(ven)t assurer la fonction du système de tension 44, plus particulièrement lorsque le (ou les) câble(s) de blocage 42 est (sont) inséré(s) dans l' (ou les) élément(s) à mémoire de forme 36.

Selon un autre mode de réalisation, pour chaque câble de blocage 42, le système de maintien en tension 44 est positionné à l'opposé du premier point d'ancrage 42.1 par rapport au système de blocage 46. Il comprend un élément de rappel, comme par exemple un ressort de traction, qui relie la deuxième extrémité 42.3 du câble de blocage 42 à l'ailette 16 (à la structure interne et/ou à la peau de l'ailette) ou à l'aile 14.

Selon un autre mode de réalisation, pour chaque câble de blocage 42, le système de maintien en tension 44 est positionné à l'opposé du premier point d'ancrage 42.1 par rapport au système de blocage 46. Il comprend un actionneur (treuil, vérin ou autre) configuré pour tirer sur le câble de blocage 42. Selon ce mode de réalisation, l'ailette 16 ne comprend aucun élément à mémoire de forme 36 et le (ou les) câble(s) de blocage 42 assure(nt) la fonction du mécanisme d'activation 34, l'actionneur (treuil, vérin ou autre) permettant de tirer sur le (ou les) câble(s) de blocage 42 pour déformer l'ailette 16 et de le (ou les) maintenir tendu(s).

Le système de blocage 46 comprend un réservoir 50 sensiblement étanche, traversé par au moins un câble de blocage 42, contenant un matériau 52 configuré pour occuper un état solide (visible sur la figure 5B), lorsque la température du matériau est inférieure à son point de fusion, dans lequel il immobilise le câble de blocage 42 ce qui correspond à l'état bloqué du système de blocage 46 et un état liquide (visible sur la figure 5A), lorsque la température du matériau est supérieure à son point de fusion, dans lequel il n'immobilise pas le câble de blocage 42 et autorise son déplacement ce qui correspond à l'état libre du système de blocage 46.

Selon une autre caractéristique de l'invention, le matériau 52 présent dans le réservoir 50 du système de blocage 46 a un point de fusion inférieur à la température atmosphérique au sol (à la pression au sol) sur la majorité de la surface de la Terre et supérieur à la température atmosphérique à l'altitude de l'aéronef durant la phase de croisière du vol (à la pression atmosphérique à l'altitude de la phase de croisière du vol). Ainsi, la nature du matériau 52 assure la fonction du système d'activation 48 et permet le passage du système de blocage 46 d'un état à l'autre.

Selon un avantage, sans apport d'énergie, le système de blocage 46 occupe l'état bloqué et maintient l'ailette 16 dans la deuxième configuration, à l'état déformé, durant la phase de croisière du vol et occupe l'état libre et ne maintient plus l'ailette 16 à l'état déformé qui revient automatiquement dans la première configuration durant les phases de décollage et d'atterrissage du vol. Cette caractéristique permet de réduire la quantité d'énergie nécessaire pour maintenir l'ailette 16 à l'état déformé.

Le matériau 52 présent dans le réservoir 50 du système de blocage 46 et le câble de blocage 42 sont configurés de sorte qu'une contrainte de rupture en cisaillement entre le matériau 52 et chaque câble de blocage 42 est comprise entre 2 et 7 MPa, la contrainte de rupture en cisaillement correspondant à la contrainte à partir de laquelle chaque câble 42 peut se déplacer par rapport au matériau 52 en phase solide.

Selon une configuration, le réservoir 50 est configuré de sorte que la longueur immergée de chaque câble de blocage 42 dans le matériau 52 soit de l'ordre 100 à 150 mm.

Selon un mode de réalisation, le matériau 52 présent dans le réservoir 50 du système de blocage 46 est de la glace atmosphérique. Avec un tel matériau, il est possible d'obtenir une contrainte de rupture en cisaillement de l'ordre de 5 MPa, si bien qu'avec une longueur immergée de câble de blocage de l'ordre de 120 mm, il est possible de maintenir deux câbles de blocage 42 avec un diamètre de l'ordre de 3 mm tendus sous un effort de 1200 DaN suffisant pour maintenir une ailette 16 à l'état déformé.

La contrainte de rupture en cisaillement entre le matériau 52 et chaque câble de blocage 42 est calibrée de manière à obtenir un passage de l'ailette 16 de la deuxième configuration à la première configuration lorsque le chargement de l'aile de l'aéronef dépasse un seuil donné. Selon un avantage procuré par une telle caractéristique, le matériau 52 assure une fonction de fusible. Ainsi, lorsque le chargement de l'aile dépasse le seuil donné, ce chargement de l'aile induit au niveau de l'interface entre le matériau 52 et les câbles de blocage 42 une contrainte supérieure à la contrainte de rupture en cisaillement si bien que les câbles de blocage 42 peuvent se déplacer par rapport au matériau 52. Dès lors, en raison de la déformation élastique initiale de l'ailette 16 pour atteindre la deuxième configuration, cette dernière revient de manière automatique dans la première configuration, les câbles de blocage 42 ne la retenant plus.

Selon un mode de réalisation visible sur les figures 5A et 5B, le système d'activation 48 comprend un système de chauffage 54, comme par exemple une résistance électrique, configuré pour provoquer la fusion du matériau 52 et son passage de l'état solide à l'état liquide. Ce système d'activation 48 permet de provoquer la fusion du matériau 52, le relâchement du (ou des) câble(s) de blocage 42 et le retour de l'ailette 16 dans la première configuration, à l'état non déformé, en cas de conditions de vol particulières susceptibles de générer une surcharge sur l'aile si l'ailette 16 restait dans la deuxième configuration, à l'état déformé. Le système de chauffage 54 permet également de provoquer la fusion du matériau 52 lorsqu'il est nécessaire en vol de réactiver le mécanisme d'activation 34 configuré pour déformer l'ailette 16.

Le dispositif de changement de configuration de l'ailette comprend un contrôleur 56 pour coordonner le mécanisme d'activation 34 configuré pour déformer l'ailette 16 et le système d'activation 48 du mécanisme de maintien 40 configuré pour maintenir l'ailette 16 à l'état déformé. Ce contrôleur 56 est configuré pour déclencher automatiquement et de manière autonome le changement de configuration de chaque ailette en fonction d'une valeur d'au moins un critère de chargement de chaque aile 14. Selon un mode de réalisation donné à titre indicatif, le contrôleur 46 déclenche le passage des ailettes 16 dans la deuxième configuration et son maintien dans cette configuration tant que le critère de chargement des ailes reste dans une plage de valeurs donnée et provoque le retour dans la première configuration lorsque le critère de chargement des ailes est en dehors de la plage de valeurs donnée.

A titre d'exemple, le critère de chargement peut être une seule donnée comme une accélération à un endroit spécifique de l'aéronef déterminée par un accéléromètre local ou une centrale à inertie de l'aéronef, une contrainte structurale mesurée sur un élément sélectionné par une jauge de contrainte ou une combinaison de plusieurs données voire des paramètres de vol comme sa vitesse, son orientation, ....

Pour un aéronef, chaque ailette 16 comprend un dispositif de changement de configuration, un unique contrôleur 56 permettant de contrôler simultanément la configuration des deux ailettes 16.

Le fonctionnement du dispositif de changement de configuration de l'ailette est maintenant décrit.

Au sol, chaque ailette 16 occupe la première configuration (visible sur les figures 3A et 4A) et, pour chacune d'elles, le système de blocage 46 des câbles de blocage 42 est à l'état libre, comme illustré sur la figure 3A. Après le décollage, de manière autonome, le contrôleur 56 déclenche le changement de configuration de chaque ailette 16 et le passage des ailettes 16 dans la deuxième configuration. Ce changement de configuration pourrait être déclenché par le pilote. Le système d'activation 48 du mécanisme de maintien 40 est activé par le contrôleur 56 pour provoquer la fusion du matériau 52. En parallèle, pour chaque ailette 16, son mécanisme d'activation 34 configuré pour la déformer est activé, comme illustré sur la figure 3B. En présence d'éléments à mémoire de forme 36, l'alimentation électrique 38 est activée par le contrôleur 56.

En se déformant les éléments à mémoire de forme 36 déforment les ailettes 16 qui passent de la première configuration à la deuxième configuration (visibles sur les figures 3B et 4B) et maintiennent les câbles de blocage 42 à l'état tendu en les faisant défiler au travers des systèmes de blocage 46.

Lorsque les éléments à mémoire de forme 36 sont complètement déformés et que les ailettes 16 sont déformées de manière élastique et occupent la deuxième configuration, le contrôleur 56 provoque la désactivation du système d'activation 48 du mécanisme de maintien 40. Dès lors pour chaque système de blocage 46, le matériau 52 passe à l'état solide et bloque les câbles de blocage 42 qui maintiennent alors les ailettes 16 dans la deuxième configuration, comme illustré sur les figures 3C et 4C. Lorsque le matériau 52 est à l'état solide et maintient le (ou les) câble(s) de blocage 46, le contrôleur 46 provoque la désactivation de l'alimentation électrique 38.

Durant toute la phase de croisière du vol, les ailettes 16 sont maintenues dans la deuxième configuration sans apport d'énergie.

En cas de variation du chargement des ailes 14, par exemple en raison d'une manœuvre ou de turbulences, le critère de chargement des ailes peut avoir une valeur en dehors de la plage de valeurs donnée. Dès lors, le contrôleur 56 provoque de manière autonome et automatique le retour des ailettes 16 dans la première configuration. A cet effet, le contrôleur 56 déclenche l'activation du système d'activation 48 du mécanisme de maintien 40 pour provoquer la fusion du matériau 52. Les câbles de blocage 42 n'étant plus maintenus, les ailettes 16 reviennent naturellement dans la première configuration. Ce retour des ailettes dans la première configuration pourrait être déclenché par le pilote.

Ce retour des ailettes 16 dans la première configuration peut également être provoqué en raison d'un chargement des ailes dépassant un seuil donné. Dans ce cas, les câbles de blocage 42 exercent une contrainte supérieure à la contrainte de rupture en cisaillement si bien que les câbles de blocage 42 peuvent se déplacer par rapport au matériau 52 à l'état solide. Lorsque le critère de chargement des ailes revient dans la plage de valeurs donnée, le contrôleur 56 déclenche le changement de configuration de chaque ailette 16 et le passage des ailettes 16 dans la deuxième configuration comme précédemment décrit. Ce changement de position pourrait être déclenché par le pilote.

Préalablement à l'atterrissage, lorsque la température atmosphérique devient supérieure à celle du point de fusion, le matériau 52 devient automatiquement liquide et relâche les câbles de blocage 42. Dès lors, ils ne retiennent plus les ailettes 16 dans la deuxième configuration, les ailettes 16 retournant automatiquement dans la première configuration grâce à leur déformation élastique initiale des ailettes 16.

Si l'atterrissage intervient dans une zone froide et que la température ne descend pas en dessous de celle du point de fusion du matériau 52, le contrôleur 56, à partir d'une certaine altitude, peut déclencher le retour des ailettes 16 dans la première configuration en activant le système de chauffage du matériau 52.

L'invention procure les avantages suivants :
Le dispositif de changement de configuration selon l'invention permet aux ailettes d'occuper deux configurations, une première configuration non ou peu chargée aérodynamiquement pour tous les cas dimensionnant des ailes ou en limite de domaine de vol, ce qui permet d'éviter un surdimensionnement des ailes et une deuxième configuration permettant de réduire la traînée des ailes dans les phases de vol où ces dernières sont faiblement chargées. Le dispositif de changement de configuration selon l'invention est peu encombrant et léger, sa masse étant inférieure à 5 Kg pour chaque ailette.

Il permet le maintien des ailettes à l'état déformé sans apport d'énergie.

Enfin, il permet un fonctionnement sûr dans la mesure où le matériau 52 assure la fonction de fusible naturel et calibré en cas de surcharges intempestives des ailes.

## Revendications

1. Ailette (16) reliée à une aile (14) d'un aéronef (10) et équipée d'un dispositif de changement de configuration, ladite ailette étant configurée pour se déformer de manière élastique entre une première configuration en l'absence d'un chargement d'activation et une deuxième configuration en présence d'un chargement d'activation, ledit dispositif de changement de configuration comprenant :
- un mécanisme d'activation (34) configuré pour occuper un état non activé dans lequel il n'exerce aucun chargement sur l'ailette et un état activé dans lequel il exerce le chargement d'activation de manière à déformer l'ailette de la première configuration vers la deuxième configuration, et
- un mécanisme de maintien (40) configuré pour maintenir l'ailette dans la deuxième configuration, le mécanisme de maintien (40) comprenant :
- au moins un câble de blocage (42) qui présente un premier point d'ancrage (42.1) relié à l'ailette,
- au moins un système de blocage (46) traversé par le câble de blocage (42) et configuré pour occuper un état libre dans lequel il n'immobilise pas le câble de blocage (42) et un état bloqué dans lequel il immobilise le câble de blocage (42),
- le premier point d'ancrage (42.1) et le système de blocage (46) étant positionnés de sorte que le câble de blocage (42) tendu entre le premier point d'ancrage (42.1) et le système de blocage (46) est configuré pour maintenir l'ailette lorsque cette dernière occupe la deuxième configuration, **caractérisée en ce que** le système de blocage (46) comprend un réservoir (50) contenant un matériau (52) présentant un point de fusion et configuré pour occuper un état solide, lorsque la température du matériau (52) est inférieure au point de fusion, dans lequel il immobilise le câble de blocage (42) ce qui correspond à l'état bloqué du système de blocage (46) et un état liquide, lorsque la température du matériau (52) est supérieure au point de fusion, dans lequel il n'immobilise pas le câble de blocage (42) et autorise son déplacement ce qui correspond à l'état libre du système de blocage (46).

2. Ailette selon la revendication 1, **caractérisée en ce que** le matériau (52) est choisi de manière à ce que le point de fusion soit inférieur à une température atmosphérique au sol et supérieur à une température atmosphérique à une altitude de l'aéronef durant une phase de croisière du vol.

3. Ailette selon la revendication 1 ou 2, **caractérisée en ce que** le matériau (52) présent dans le réservoir (50) et le câble de blocage (42) sont configurés de sorte qu'une contrainte de rupture en cisaillement entre le matériau (52) et chaque câble de blocage (42) est calibrée de manière à obtenir un passage de l'ailette (16) de la deuxième configuration à la première configuration lorsqu'un chargement de l'aile de l'aéronef dépasse un seuil donné.

4. Ailette selon la revendication 3, **caractérisée en ce que** le matériau (52) est une glace atmosphérique et **en ce que** le mécanisme de maintien (40) comprend deux câbles de blocage (42) qui présentent chacun un diamètre de l'ordre de 3 mm et une longueur immergée dans le matériau (52) de l'ordre de 100 à 150 mm.

5. Ailette selon l'une des revendications précédentes, **caractérisée en ce que** le système de maintien (40) comprend un système d'activation (48) configuré pour provoquer la fusion du matériau (52).

6. Ailette selon l'une des revendications précédentes, **caractérisée en ce que** le mécanisme de maintien (40) comprend un système de maintien en tension (44) de chaque câble de blocage (42).

7. Ailette selon l'une des revendications précédentes, **caractérisée en ce que** le mécanisme d'activation (34) comprend au moins un élément à mémoire de forme (36) activable par effet joule, configuré pour occuper un état non déformé et un état déformé dans lequel il génère le chargement d'activation et au moins une alimentation électrique (38) configurée pour délivrer une énergie électrique à l'élément à mémoire de forme (36) pour provoquer un passage de l'état non déformé à l'état déformé.

8. Ailette selon la revendication précédente, **caractérisée en ce que** l'élément à mémoire de forme (36) est activé par chauffage.

9. Ailette selon la revendication 7 ou 8, **caractérisée en ce qu'**au moins un câble de blocage (42) est inséré dans un des éléments à mémoire de forme (36).

10. Ailette selon la revendication 7 ou 8, **caractérisée en ce qu'**au moins un câble de blocage (42) suit un cheminement différent de l' (ou des) élément(s) à mémoire de forme (36).

11. Ailette selon l'une des revendications 1 à 6, **caractérisée en ce que** le dispositif de changement de configuration comprend, pour chaque câble de blocage (42), un actionneur relié à la deuxième extrémité du câble de blocage (42), positionné à l'opposé du premier point d'ancrage (42.1) par rapport au système de blocage (46) et configuré pour tirer sur le câble de blocage (42).

12. Ailette selon l'une des revendications précédentes, **caractérisée en ce que** le dispositif de changement de configuration comprend un contrôleur (56) pour coordonner le mécanisme d'activation (34) configuré pour déformer l'ailette et le mécanisme de maintien (40) configuré pour maintenir l'ailette à l'état déformé.

13. Ailette selon la revendication précédente, **caractérisée en ce que** le contrôleur (56) est configuré pour déclencher automatiquement et de manière autonome un changement de configuration de l'ailette en fonction d'une valeur d'au moins un critère de chargement de chaque aile.

14. Aéronef comprenant des ailes pourvues chacune d'au moins une ailette selon l'une des caractéristiques précédentes.

## Patentansprüche

1. Winglet (16), welches mit einer Tragfläche (14) eines Luftfahrzeugs (10) verbunden ist und mit einer Vorrichtung zur Konfigurationsänderung ausgestattet ist, wobei das Winglet dafür ausgelegt ist, sich zwischen einer ersten Konfiguration bei Nichtvorhandensein einer Aktivierungsbelastung und einer zweiten Konfiguration bei Vorhandensein einer Aktivierungsbelastung elastisch zu verformen, wobei die Vorrichtung zur Konfigurationsänderung umfasst:
- einen Aktivierungsmechanismus (34), der dafür ausgelegt ist, einen nicht aktivierten Zustand einzunehmen, in welchem er keine Belastung auf das Winglet ausübt, und einen aktivierten Zustand, in welchem er die Aktivierungsbelastung ausübt, um so das Winglet aus der ersten Konfiguration in die zweite Konfiguration zu verformen, und
- einen Haltemechanismus (40), der dafür ausgelegt ist, das Winglet in der zweiten Konfiguration zu halten,
wobei der Haltemechanismus (40) umfasst:
- wenigstens ein Blockierseil (42), welches einen ersten Verankerungspunkt (42.1) aufweist, der mit dem Winglet verbunden ist,
- wenigstens ein Blockiersystem (46), das von dem Blockierseil (42) durchquert wird und dafür ausgelegt ist, einen freien Zustand, in welchem es das Blockierseil (42) nicht arretiert, und einen blockierten Zustand, in welchem es das Blockierseil (42) arretiert, einzunehmen,
- wobei der erste Verankerungspunkt (42.1) und das Blockiersystem (46) derart positioniert sind, dass das zwischen dem ersten Verankerungspunkt (42.1) und dem Blockiersystem (46) gespannte Blockierseil (42) dafür ausgelegt ist, das Winglet zu halten, wenn dieses Letztere die zweite Konfiguration einnimmt,
**dadurch gekennzeichnet, dass** das Blockiersystem (46) einen Behälter (50) umfasst, der ein Material (52) enthält, das einen Schmelzpunkt aufweist und dafür ausgelegt ist, wenn die Temperatur des Materials (52) niedriger als der Schmelzpunkt ist, einen festen Zustand einzunehmen, in welchem es das Blockierseil (42) arretiert, was dem blockierten Zustand des Blockiersystems (46) entspricht, und wenn die Temperatur des Materials (52) höher als der Schmelzpunkt ist, einen flüssigen Zustand, in welchem es das Blockierseil (42) nicht arretiert und seine Bewegung ermöglicht, was dem freien Zustand des Blockiersystems (46) entspricht.

2. Winglet nach Anspruch 1, **dadurch gekennzeichnet, dass** das Material (52) so gewählt ist, dass der Schmelzpunkt niedriger als eine atmosphärische Temperatur am Boden und höher als eine atmosphärische Temperatur in einer Höhe des Luftfahrzeugs während einer Reiseflugphase ist.

3. Winglet nach Anspruch 1 oder 2, **dadurch gekennzeichnet, dass** das Material (52), das im Behälter (50) vorhanden ist, und das Blockierseil (42) derart ausgelegt sind, dass eine Scherbruchbeanspruchung zwischen dem Material (52) und dem Blockierseil (42) so kalibriert ist, dass ein Übergang des Winglets (16) aus der zweiten Konfiguration in die erste Konfiguration bewirkt wird, wenn eine Belastung der Tragfläche des Luftfahrzeugs einen gegebenen Schwellenwert überschreitet.

4. Winglet nach Anspruch 3, **dadurch gekennzeichnet, dass** das Material (52) atmosphärisches Eis ist, und dadurch, dass der Haltemechanismus (40) zwei Blockierseile (42) umfasst, welche jeweils einen Durchmesser in der Größenordnung von 3 mm und eine in das Material (52) eingetauchte Länge in der Größenordnung von 100 bis 150 mm aufweisen.

5. Winglet nach einem der vorhergehenden Ansprüche, **dadurch gekennzeichnet, dass** das Haltesystem (40) ein Aktivierungssystem (48) umfasst, das dafür ausgelegt ist, das Schmelzen des Materials (52) hervorzurufen.

6. Winglet nach einem der vorhergehenden Ansprüche, **dadurch gekennzeichnet, dass** der Haltemechanismus (40) ein System zur Aufrechterhaltung der Spannung (44) jedes Blockierseils (42) umfasst.

7. Winglet nach einem der vorhergehenden Ansprüche, **dadurch gekennzeichnet, dass** der Aktivierungsmechanismus (34) wenigstens ein durch Joule-Effekt aktivierbares Formgedächtniselement (36), das dafür ausgelegt ist, einen nicht verformten Zustand und einen verformten Zustand, in welchem es die Aktivierungsbelastung erzeugt, einzunehmen, und wenigstens eine Stromversorgung (38), die dafür ausgelegt ist, dem Formgedächtniselement (36) eine elektrische Energie zu liefern, um einen Übergang aus dem nicht verformten Zustand in den verformten Zustand hervorzurufen, umfasst.

8. Winglet nach dem vorhergehenden Anspruch, **dadurch gekennzeichnet, dass** das Formgedächtniselement (36) durch Erwärmung aktiviert wird.

9. Winglet nach Anspruch 7 oder 8, **dadurch gekennzeichnet, dass** wenigstens ein Blockierseil (42) in eines der Formgedächtniselemente (36) eingesetzt ist.

10. Winglet nach Anspruch 7 oder 8, **dadurch gekennzeichnet, dass** wenigstens ein Blockierseil (42) einem Verlauf folgt, der von dem (oder den) Formgedächtniselement(en) (36) verschieden ist.

11. Winglet nach einem der Ansprüche 1 bis 6, **dadurch gekennzeichnet, dass** die Vorrichtung zur Konfigurationsänderung für jedes Blockierseil (42) einen Aktuator umfasst, der mit dem zweiten Ende des Blockierseils (42) verbunden ist, bezogen auf das Blockiersystem (46) gegenüber dem ersten Verankerungspunkt (42.1) positioniert ist und dafür ausgelegt ist, an dem Blockierseil (42) zu ziehen.

12. Winglet nach einem der vorhergehenden Ansprüche, **dadurch gekennzeichnet, dass** die Vorrichtung zur Konfigurationsänderung eine Steuereinheit (56) zum Koordinieren des Aktivierungsmechanismus (34), der dafür ausgelegt ist, das Winglet zu verformen, und des Haltemechanismus (40), der dafür ausgelegt ist, das Winglet im verformten Zustand zu halten, umfasst.

13. Winglet nach dem vorhergehenden Anspruch, **dadurch gekennzeichnet, dass** die Steuereinheit (56) dafür ausgelegt ist, eine Konfigurationsänderung des Winglets automatisch und auf autonome Weise in Abhängigkeit von einem Wert wenigstens eines Kriteriums der Belastung jeder Tragfläche auszulösen.

14. Luftfahrzeug, welches Tragflächen umfasst, die jeweils mit wenigstens einem Winglet nach einem der vorhergehenden Ansprüche versehen sind.

## Claims

1. Winglet (16) linked to a wing (14) of an aircraft (10) and equipped with a configuration changing device, said winglet being configured to be deformed elastically between a first configuration in the absence of an activation loading and a second configuration in the presence of an activation loading, said configuration changing device comprising:
- an activation mechanism (34) configured to occupy a non-activated state in which it exerts no loading on the winglet and an activated state in which it exerts the activation loading so as to deform the winglet from the first configuration to the second configuration, and
- a holding mechanism (40) configured to hold the winglet in the second configuration,
the holding mechanism (40) comprising:
- at least one blocking cable (42) which has a first anchoring point (42.1) linked to the winglet,
- at least one blocking system (46) passed through by the blocking cable (42) and configured to occupy a free state in which it does not immobilize the blocking cable (42) and a blocked state in which it immobilizes the blocking cable (42),
- the first anchoring point (42.1) and the blocking system (46) being positioned in such a way that the blocking cable (42) stretched between the first anchoring point (42.1) and the blocking system (46) is configured to hold the winglet when the latter occupies the second configuration,
**characterized in that** the blocking system (46) comprises a tank (50) containing a material (52) having a melting point and configured to occupy a solid state, when the temperature of the material (52) is lower than the melting point, in which it immobilizes the blocking cable (42) which corresponds to the blocked state of the blocking system (46) and a liquid state, when the temperature of the material (52) is higher than the melting point, in which it does not immobilize the blocking cable (42) and allows the displacement thereof which corresponds to the free state of the blocking system (46).

2. Winglet according to Claim 1, **characterized in that** the material (52) is chosen such that the melting point is lower than an atmospheric temperature on the ground and higher than an atmospheric temperature at an altitude of the aircraft during a cruising phase of the flight.

3. Winglet according to Claim 1 or 2, **characterized in that** the material (52) present in the tank (50) and the blocking cable (42) are configured in such a way that a shear breaking stress between the material (52) and each blocking cable (42) is gauged so as to obtain a switching of the winglet (16) from the second configuration to the first configuration when a loading of the wing of the aircraft exceeds a given threshold.

4. Winglet according to Claim 3, **characterized in that** the material (52) is atmospheric ice and **in that** the holding mechanism (40) comprises two blocking cables (42) which each have a diameter of the order of 3 mm and a length immersed in the material (52) of the order of 100 to 150 mm.

5. Winglet according to one of the preceding claims, **characterized in that** the holding system (40) comprises an activation system (48) configured to provoke the melting of the material (52).

6. Winglet according to one of the preceding claims, **characterized in that** the holding mechanism (40) comprises a tensioning system (44) for each blocking cable (42).

7. Winglet according to one of the preceding claims, **characterized in that** the activation mechanism (34) comprises at least one element with shape memory (36) that can be activated by Joule effect, configured to occupy a non-deformed state and a deformed state in which it generates the activation loading and at least one electrical power supply (38) configured to deliver an electrical energy to the element with shape memory (36) to provoke a switch from the non-deformed state to the deformed state.

8. Winglet according to the preceding claim, **characterized in that** the element with shape memory (36) is activated by heating.

9. Winglet according to Claim 7 or 8, **characterized in that** at least one blocking cable (42) is inserted into one of the elements with shape memory (36).

10. Winglet according to Claim 7 or 8, **characterized in that** at least one blocking cable (42) follows a different run from the element (or elements) with shape memory (36).

11. Winglet according to one of Claims 1 to 6, **characterized in that** the configuration changing device comprises, for each blocking cable (42), an actuator linked to the second end of the blocking cable (42), positioned opposite the first anchoring point (42.1) relative to the blocking system (46) and configured to pull on the blocking cable (42).

12. Winglet according to one of the preceding claims, **characterized in that** the configuration changing device comprises a controller (56) for coordinating the activation mechanism (34) configured to deform the winglet and the holding mechanism (40) configured to hold the winglet in the deformed state.

13. Winglet according to the preceding claim, **characterized in that** the controller (56) is configured to automatically and independently trigger a change of configuration of the winglet as a function of a value of at least one criterion of loading of each wing.

14. Aircraft comprising wings each provided with at least one winglet according to one of the preceding features.
